# EUROPÄISCHE PATENTSCHRIFT

(11) **EP 1 945 979 B1**
(45) Veröffentlichungstag und Bekanntmachung des Hinweises auf die Patenterteilung: **22.07.2009**
(21) Anmeldenummer: 06804855.2
(22) Anmeldetag: 03.11.2006
(51) Int. Cl.: F16K 11/22

(54) **STEUERGERÄT MIT VENTILEN**
CONTROL UNIT HAVING VALVES
APPAREIL DE COMMANDE AVEC SOUPAPES

(30) Priorität: 10.11.2005 CH 17992005
(43) Veröffentlichungstag der Anmeldung: 23.07.2008
(73) Patentinhaber: Soltherm AG, 8852 Altendorf (CH)
(72) Erfinder: KOLLBRUNNER, Stephan, CH-8704 Herrliberg (CH); LANDIS, Patrick, CH-8320 Fehraltorf (CH); GRÜNIGER, Emil, CH-8852 Altendorf (CH)
(74) Vertreter: Schaad, Balass, Menzl & Partner AG
(86) Internationale Anmeldenummer: PCT/CH2006/000621
(87) Internationale Veröffentlichungsnummer: WO 2007/053969

(56) Entgegenhaltungen:
- FR-A- 2 539 204
- GB-A- 1 455 611
- JP-A- 50 061 736
- US-A- 2 399 460
- PATENT ABSTRACTS OF JAPAN Bd. 2003, Nr. 12, 5. Dezember 2003 (2003-12-05) & JP 2004 353846 A (KIMMON MFG CO LTD; KOYO SANGYO KK), 16. Dezember 2004 (2004-12-16)
- PATENT ABSTRACTS OF JAPAN Bd. 006, Nr. 242 (M-175), 30. November 1982 (1982-11-30) & JP 57 140971 A (KAWASAKI SEITETSU KK), 31. August 1982 (1982-08-31)

## Beschreibung

Die vorliegende Erfindung betrifft ein Steuergerät gemäss dem Oberbegriff des Patentanspruches 1.

Die ältere deutsche Gebrauchsmusteranmeldung Nr. 20 2005 0.08 889.7 der Anmelderin offenbart ein Steuergerät mit einem Antriebsteil, einem Sockel und einem Steuerteil, wobei der Antriebsteil auf einer und der Steuerteil auf einer gegenüberliegenden Seite des Sockels angeordnet ist. Der Steuerteil umfasst zwei Drehventile in Form von Kugelhähnen, welche je ein Schaltglied enthalten, das jeweils zwischen einer ersten Endlage und einer zweiten Endlage bewegbar ist. Jeder Dreiweg-Kugelhahn weist dabei zwei Querschenkel und einen Drehachsenschenkel auf, welche in einer Ventilebene liegen. Die Schaltglieder der einzelnen Drehventile sind jeweils auf ihnen zugeordneten Drehventilwellen angeordnet, auf welchen drehfest je ein Zahnrad sitzt, welches über ein im Sockel untergebrachtes Getriebe mit einem im Antriebsteil untergebrachten Antrieb zusammen wirkt. Die Verbindung von den auf den Drehventilwellen drehfest angeordneten Zahnrädern und dem Getriebe wird durch ein Treibrad erreicht, welches gleichzeitig zum synchronen Antrieb der Schaltglieder dient.

Bei einer Verwendung des obgenannten Steuergerätes kann sich in der Praxis das Problem ergeben, dass es eine zu grosse Bauhöhe aufweist, um es für einen Einsatz geeignet zu machen.

Deshalb ist es eine Aufgabe der vorliegenden Erfindung, das gattungsgemässe Steuergerät derart weiter zu bilden, dass es eine geringere Bauhöhe aufweist.

Diese Aufgabe wird mit einem erfindungsgemässen Steuergerät nach Anspruch 1 gelöst. Dadurch, dass der Antriebsteil und der Steuerteil in Richtung einer Längsachse hintereinander auf einer gemeinsamen Oberseite des Sockels angeordnet sind, kann die Bauhöhe des Steuergerätes reduziert werden.

Eine bevorzugte Ausführungsform gemäss Anspruch 2 hat den Vorteil, dass die als Dreiweg-Kugelhähne ausgebildeten Drehventile trotz weitgehender Schmutzunempfindlichkeit eine erstklassige Absperrung der an ihnen angeschlossenen Medien gewährleisten können.

Eine bevorzugte Ausführungsform des erfindungsgemässen Steuergerätes gemäss Anspruch 3 bringt den Vorteil, dass die Anschlüsse des T-förmigen Gehäuses einfach und übersichtlich vorliegen und auch dementsprechend einfach und mit kurzer Montagezeit, beispielsweise in ein Kühl/Heizsystem einer Klimaanlage, selbst bei beengten Platzverhältnissen, wie sie bspw. im Bodenbereich auftreten können, eingebunden werden können.

Bevorzugte Ausführungsformen gemäss den Ansprüchen 4, 5 und 6 haben den Vorteil, dass die Montagefreundlichkeit der Anschlüsse noch zusätzlich verbessert ist, indem die zum Steuergerät führenden Anschlussleitungen, von oben gesehen, bei einer Ausrichtung des Steuergerätes derart, dass die Oberseite im wesentlichen parallel zur Fussbodenfläche verläuft, montageoptimiert nebeneinander angeordnet sind.

Weitere bevorzugte Ausführungsformen gemäss den Ansprüchen 7 und 8 haben den Vorteil, dass eine besonders bedienerfreundliche Anschlussgeometrie bei kompakter Bauweise und bei einem herstellungsfreundlichen Aufbau erreicht wird.

Bei einer bevorzugten Ausführungsform des erfindungsgemässen Steuergerätes gemäss Anspruch 10 kann das Synchronisationsgetriebe auf eine wirtschaftliche Weise mit einer kleinstmöglichen Anzahl von Teilen realisiert werden.

Eine weitere bevorzugte Ausführungsform gemäss Anspruch 11 hat den Vorteil, dass der elektrische Stellmotor wartungsarm, kompakt und mit kleinstem Aufwand steuerbar, regelbar und kontrollierbar ist.

Bei einer bevorzugten Ausführungsform des erfindungsgemässen Steuergerätes gemäss Anspruch 13 kann die Geometrie des Sockels mit einer minimalen Komplexität hergestellt werden, da das als Baugruppe vormontierbare Steuerteil 16 und Antriebsteil 12 nur am Sockel befestigt werden muss.

Eine bevorzugte Ausführungsform gemäss Anspruch 14 hat den Vorteil, dass für das Zwischengetriebe Standardzahnräder verwendet werden können, was wirtschaftliche Vorteile mit sich bringt. Zudem kann ein besonders einfacher Getriebeaufbau bei gleichzeitig minimalem Teilebedarf erreicht werden.

Bei einer bevorzugten Ausführungsform gemäss Anspruch 15 kann eine Positionierscheibe beispielsweise Markierungen und/oder schlitzförmige Durchdringungen aufweisen, mit welchen die Sensorikeinheit die Position des Schaltgliedes, respektive der Drehwinkel der Ventilwelle optisch erfasst, um sie zu Steuer- oder Regelzwecken an ein dazu geeignetes Steuer- oder Regelgerät, beispielsweise in Form eines Raumbuskontrollers, zu übermitteln. Damit kann Gewissheit über die Position der Schaltglieder erlangt werden, um bei einer allfälligen Soll-Ist-Abweichung des Drehwinkels noch rechtzeitig korrigierend einzugreifen zu können. Gleichzeitig kann eine solche Anordnung zur Überwachung der Drehventile eingesetzt werden.

Die obgenannten Vorteile machen das erfindungsgemässe Steuergerät insbesondere für einen Einsatz in Klimaanlagen zur Ansteuerung eines im Bodenbereich angeordneten Klimakonvektors deshalb besonders geeignet.

Weitere Eigenschaften und Vorteile der vorliegenden Erfindung werden aus den folgenden Beschreibung und der Zeichnung ersichtlich.

Es zeigen rein schematisch:
- Fig. 1: eine erste Ausführungsform eines erfindungsgemässen Steuergerätes in der Ansicht;
- Fig. 2: das in Fig.1 gezeigte Steuergerät mit demontierter Ventilkörperabdeckung und in vereinfachter Darstellung ein Synchronisationsgetriebe;
- Fig. 3: eine Schnittansicht durch das in Fig. 2 gezeigte Steuergerät entlang der Schnittebene III-III von Fig.2;
- Fig. 4: eine vereinfachte Seitenansicht des in Fig 1 bis 3 gezeigten Steuergerätes, wobei ein Steuerteilgehäuse entfernt ist;
- Fig. 5: eine vereinfachte Ansicht einer Positionierscheibe und einer ihr zugeordneten Sensorikeinheit des in Fig. 4 gezeigten Steuergerätes entlang der Schnittebene V-V von Fig. 4;
- Fig. 6: in gleicher Darstellung wie Fig. 4 eine zweite Ausführungsform des erfindungsgemässen Steuergerätes;
- Fig. 7: einen Schemaausschnitt einer Klimaanlage mit einem Dreileitersystem, Klimakonvektoren und einem erfindungsgemässen Steuergerät; und
- Fig. 8: einen Schemaausschnitt einer Klimaanlage mit einem Vierleitersystem, einem Klimakonvektor und einem erfindungsgemässen Steuergerät.

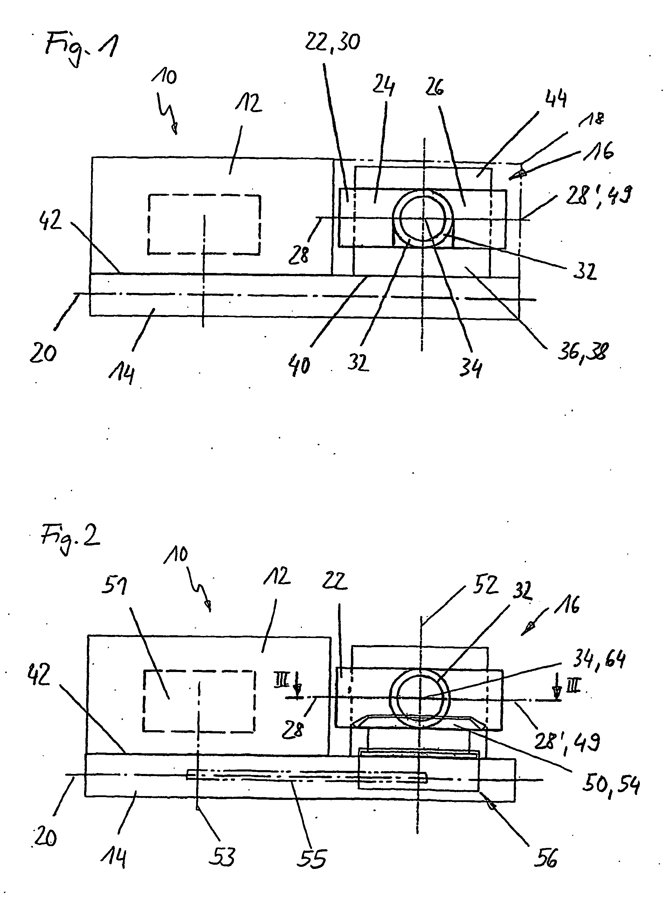

Die Fig. 1 zeigt eine Ansicht eines erfindungsgemässen Steuergerätes 10, welches einen Antriebsteil 12, einen Sockel 14 und einen Steuerteil 16 aufweist, wobei ein den Steuerteil 16 abdeckendes Steuerteilgehäuse 18 durch eine strichpunktierte Linie nur stilisiert dargestellt ist. Der Sockel 14 definiert eine Längsachse 20 des Steuergerätes 10. Das in Fig.1 dargestellte Steuergerätes 10 weist ein Drehventil 22 und ein weiteres Drehventil 22' auf, wobei diese derart angeordnet sind, dass man in Fig.1 nur das Drehventil 22 sieht. Das Drehventil 22 ist dabei derart im Steuerteil 16 angeordnet, dass ein Querschenkel 24 und ein weiterer Querschenkel 26, welche je koaxial zu einer Querschenkelachse 28, 28' verlaufend angeordnet sind, die Seitenarme des T-förmigen Gehäuses 30 des Drehventils 22 bilden, wobei die Querschenkelachsen 28, 28' parallel zur Längsachse 20 des Sockels 14 verlaufend in einer Ventilebene 49 angeordnet sind, welche selber parallel zur Oberfläche 42 des Sockels 14 verläuft. Ein Drehachsenschenkel 32 des T-förmigen Gehäuses 30 vom Drehventil 22, welcher koaxial zu einer ihm zugeordneten Drehachse 34 verläuft, ist rechtwinklig zu den Querschenkelachsen 28, 28' angeordnet und zeigt vom Steuergerät 10 weg.

Das Drehventil 22 ist an einem Seitenschenkel 36 eines U-förmigen Profils 38 drehfest befestigt, wobei das U-förmige Profil 38 mit einem Mittelteil 40 am Sockel 14 befestigt ist. Aus der Fig. 1 wird ersichtlich, dass der Antriebsteil 12 und der Steuerteil 16 auf einer Oberseite des Sockels 14 in Längsrichtung entlang der Längsachse 20 nacheinander angeordnet sind. Aus der Fig. 1 ist ebenfalls ersichtlich, dass das T-förmige Gehäuse 30 des Drehventils 22 von einer Ventilkörperabdeckung 44 zumindest partiell umschlossen ist.

Bei der in Fig. 2 gezeigten Darstellung des Steuergerätes 10 sind gegenüber der Darstellung von Fig. 1 noch zusätzlich ein Treibrad 50 mit einer Treibradachse 52 eines Synchronisationsgetriebes 54 in vereinfachter Darstellung dargestellt. Die Treibradachse 52 ist dabei derart ausgerichtet, dass sie rechtwinklig zur Längsachse 20 des Sockels 14 und rechtwinklig zur Oberseite 42 des Sockels 14 verlaufend angeordnet ist und zusammen mit der Drehachse 34 des Drehventils 22 in einer Querebene liegt, welche rechtwinklig zu einer Längsmittelebene 62 steht. Das Synchronisationsgetriebe 54 ist als Kegelradgetriebe gestaltet, und das Treibrad 50 ist derart angeordnet, dass eine zahnbestückte Stirnseite der Oberseite 42 des Sockels 14 abgewandt ist. Das Treibrad 50 ist mit einer Mitnehmereinrichtung 56 drehfest verbunden, welche im Sockel 14 gelagert ist. Ein Antrieb 51, der einen elektrischen Stellmotor umfasst, ist dabei derart im Antriebsteil 12 untergebracht, dass eine ihm zugeordnete Antriebswelle 53 die Oberseite 42 des Sockels 14 durchgreift, um mit einem im Sockel 14 angeordneten Verbindungselement 55 in Form eines beispielsweise aus Stirnzahnrädern bestehenden Zwischengetriebes auf das Treibrad 50 und damit auf die Drehventile 22, 22' einwirken zu können.

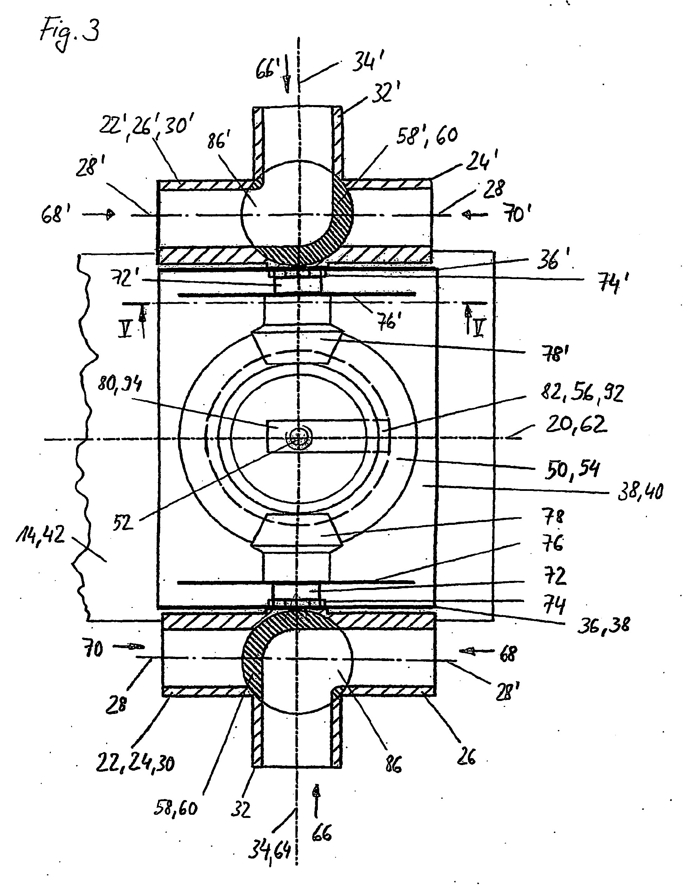

Fig. 3 zeigt einen Querschnitt durch das in Fig. 1 und 2 gezeigte, erfindungsgemässe Steuergerät 10 entlang der in Fig. 2 gezeigten Schnittebene III-III, wobei sich ein Schaltglied 58,58' jedes Drehventils 22, 22' in einer ersten Endlage 60 befindet. Die Längsachse 20 und die Treibradachse 52 definieren die Längsmittelebene 62, die rechtwinklig zur Oberseite 42 des Sockels 14 verlaufend angeordnet ist. Die Drehventile 22, 22' sind symmetrisch zur Längsmittelebene 62 angeordnet. Die Drehachsen 34, 34' der jeweiligen Drehventile 22, 22' sind zudem fluchtend auf einer Geraden 64 angeordnet, welche rechtwinklig zur Längsmittelebene 62 verläuft.

Durch die Bauform der als Dreiweg-Kugelhahn ausgebildeten Drehventils 22, 22' weist jedes der Drehventile 22,22' je drei Anschlüsse auf, welche zum Anschliessen an eine entsprechende Verrohrung, beispielsweise eines Klimasystems, mit je einem Innengewinde versehen sind. Eine solche Bauform hat den Vorteil, dass die Kompaktheit des Steuergeräteaufbaus und ein montagegerechtes Beieinanderliegen der Anschlüsse zusätzlich begünstigt wird.

Die Praxis hat gezeigt, dass handelsübliche Dreiweg-Kugelhähne 22, 22' eine erstklassige Absperrung der angeschlossenen Medien bewirken. Beispielsweise sind in einem Heiz- oder einem Kühlwasserkreislauf einer Klimaanlage Ablagerungen von Partikeln unvermeidlich, was zu Betriebsausfällen führen kann, wenn ein Ventilsitz eines verbreiteten Hubventils "hängen" bleibt und in der Folge das Ventil nicht mehr richtig schliessen, beziehungsweise absperren kann. Durch den Einsatz von Drehventilen 22, 22' welche bauartbedingt schmutzunempfindlicher sind, kann hingegen eine absolut dichte Absperrung realisiert werden.

Für die nachfolgenden Merkmale der beiden Drehventile 22, 22' werden für gleichwirkende Teile dieselben Bezugszeichen verwendet, wobei die dem Drehventil 22' zugeordneten Bezugszeichen jeweils mit einem "Strich" gekennzeichnet sind.

Ein erster Anschluss 66, 66' ist dem Drehachsenschenkel 32, 32' zugeordnet. Durch eine L-förmige Durchdringung im jeweiligen kugelförmigen Schaltglied 58, 58' sind die ersten Anschlüsse 66, 66' in der ersten Endlage 60 daher mit einem zweiten Anschluss 68, 68' der Drehventile 22, 22' hydraulisch verbunden, wobei der zweite Anschluss 68, 68' der Querschenkelachse 28' zugeordnet ist. In der ersten Endlage 60 ist ein der Querschenkelachse 28 zugeordneter dritter Anschluss 70, 70' durch das jeweilige, als Kugel ausgebildete Schaltglied 58, 58' abgesperrt. Die Schaltglieder 58, 58' der Drehventile 22, 22' sind zu Antriebszwecken jeweils fest mit je einer Drehventilwelle 72, 72' verbunden, wobei diese Drehventilwelle 72, 72' auf der dem ersten Anschluss 66, 66' abgewandten Seite des Drehventils 22, 22' angeordnet ist.

Aus der in der Fig. 3 gezeigten Anordnung der Schaltglieder 58, 58' in der ersten Endlage 60, lässt sich auch eine zweite Endlage 84 erkennen, bei der die Schaltglieder 58, 58' um 180° um die Drehachsen 34, 34' gedreht sind. In der zweiten Endlage 84 sind die ersten Anschlüsse 66, 66' mit den dritten Anschlüssen 70, 70' hydraulisch verbunden, während die zweiten Anschlüsse 68, 68' abgesperrt sind.

Aus der Fig.3 ist ebenfalls ersichtlich, dass der erste Anschluss 66, 66' dauernd mit dem L-förmigen Durchdringung des Schaltgliedes 58, 58' verbunden ist.

Wird das Schaltglied 58, 58' von der ersten Endlage 60 in die zweite Endlage 84 gedreht, verschiebt sich ein Teilkanal 86 bzw. 86' der L-förmigen Durchdringung des Schaltgliedes 58, 58' relativ zu den Anschlüssen 68, 68' und 70, 70' und durchquert dabei einen Totraum, in welchem weder der zweite Anschluss 68, 68' noch der dritte Anschluss 70, 70' hydraulisch mit dem ersten Anschluss 66, 66' verbunden ist. Das heisst, dass bei einer Drehung von einer Endlage 60, 84 in die andere Endlage 84, 60 bei einem Drehwinkel der Schaltglieder 58, 58' um die Drehachse 34, 34' von 90° jeweils alle drei Anschlüsse 66, 66', 68, 68', 70, 70' hydraulisch voneinander getrennt sind.

Es ist durchaus möglich, dass sich die Schaltglieder 58, 58' in einer Zwischenposition zwischen der ersten Endlage 60 und der zweiten Endlage 84 befinden, wodurch der Teilkanal 86, 86' der L-förmigen Durchdringung des Schaltgliedes 58, 58', nur noch teilweise mit dem zweiten Anschluss 68, 68' oder dem dritten Anschluss 70, 70' hydraulisch verbunden ist. Die Drehventile 22, 22' sind somit dazu geeignet, eine Durchflusssteuerung des Mediums und damit eine Steuerung der Wärmeabgabe oder Wärmeaufnahme in Funktion des Drehwinkels der Schaltglieder 58, 58' zu ermöglichen. Durch die Ausführungsform der Drehventile 22, 22' in Form von Dreiweg-Kugelhähnen wirken die Drehventile 22, 22' als eine Art 3/2-Wegeventile und das Steuergerät 10 als eine Art 6/2-Wegeventil, wobei Zwischenstellungen der Schaltglieder 58, 58' möglich sind.

Die T-förmigen Gehäuse 30, 30' der Drehventile 22, 22' sind jeweils drehventilwellenseitig über eine gesicherte Mutter 74, 74' am zugeordneten Seitenschenkel 36, 36' des U-förmigen Profils 38 drehfest befestigt.

Auf jeder Drehventilwelle 72, 72' der Drehventile 22, 22' sitzt drehfest eine Positionierscheibe 76, 76' und ein Zahnrad 78, 78' welches als Kegelrad ausgebildet ist und mit dem Treibrad 50 kämmt. Das Treibrad 50 ist über einen Mitnehmer 80 mit der Mitnehmereinrichtung 56 verbunden. Die Mitnehmereinrichtung 56 weist dazu eine entsprechend geformte Aussparung 82 zur Aufnahme einer inwärts in Richtung der Treibradachse 52 gerichteten Mitnehmerzunge 94 des Mitnehmers 80 auf.

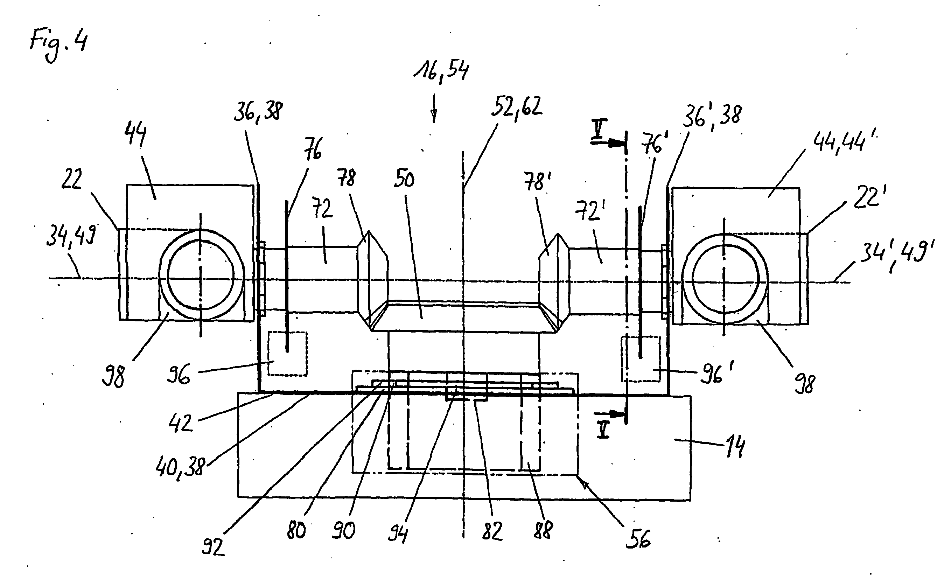

Die Fig.4 zeigt eine vereinfachte Seitenansicht des in den Fig. 1 bis 3 gezeigten erfindungsgemässen Steuergerätes 10, wobei zugunsten der besseren Übersichtlichkeit der Antriebsteil 12 und das Steuerteilgehäuse 18, sowie ein Grossteil des Sockels 14 weggelassen worden sind. Die Fig.4 zeigt nochmals deutlich, wie die auf den Drehachsen 34, 34', beziehungsweise den Drehventilwellen 72, 72' der jeweiligen Drehventile 22, 22' angeordneten Zahnräder 78, 78' kämmend mit dem Treibrad 50 zusammenwirken. Im Zusammenhang mit Fig. 4 wird auf eine konkrete Ausführungsform der Mitnehmereinrichtung 56 eingegangen. Diese Mitnehmereinrichtung 56 besteht im wesentlichen aus einem buchsenartigen Grundkörper 88, welcher koaxial um die Treibradachse 52 drehbar im Sockel 14 gelagert ist.

Der buchsenartige Grundkörper 88 ragt dabei teilweise aus dem Sockel 14 über dessen Oberseite 42 heraus, wodurch die Montage des Mitnehmers 80 auf dem buchsenartigen Grundkörper 88 vereinfacht werden kann. Zur Erhöhung der Verdrehpräzision und zur Übertragung des Drehmomentes vom Antrieb 51 auf das Treibrad 50 ist die als quer zur Treibradachse 52 verlaufende, nutartige Aussparung 82 im über die Oberseite 42 herausragenden Teil des buchsenartigen Grundkörpers 88 ausgearbeitet. Der ringförmige Mitnehmer 80 greift mit seiner Mitnehmerzunge 94 in die Aussparung 82 ein und umfasst des buchsenartigen Grundkörper 88. Eine auf dem buchsenartigen Grundkörper 88 sitzende Wellensicherung 92 hält den Mitnehmer 80 zwischen der Oberseite 42 des Sockels 14 und der Wellensicherung 92 und verhindert dadurch, dass sich der Mitnehmer 80 im Betrieb entlang der Treibradachse 52 vom buchsenartigen Grundkörper 88 entfernen kann. Zur Aufnahme der Wellensicherung 92 ist dazu in den buchsenartigen Grundkörper 88 eine entsprechende Rille 90 eingearbeitet. Das Treibrad 50 ist drehfest mit dem Mitnehmer 80 verbunden, beispielsweise über eine in der Mitnehmerzunge 94 angeordnete Schraubenverbindung.

Aus der Fig. 4 wird ebenfalls ersichtlich, dass jeder Positionierscheibe 76, 76' eine entsprechende Sensorikeinheit 96, 96' in der Form eines Inkrementalgebers zum Erfassen einer Winkelposition der jeweiligen Positionierscheibe 76, 76' zugeordnet ist. Diese nur stilisiert dargestellten Sensorikeinheiten 96, 96' sind dabei fest im Steuerteil 16 angeordnet.

Aus den Fig. 3 und 4 ist auch ersichtlich, dass das Treibrad 50 doppelt so gross wie die auf den Drehachsen 34, 34' sitzenden Zahnräder 78 bzw. 78' ist. Dadurch entspricht der Drehwinkel der Drehventile 22, 22' nicht direkt dem Drehwinkel des Treibrades 50. Bei einer durch den Stellmotor 51 ausgelösten Drehung des Treibrades 50 um beispielsweise 90° erfolgt daher eine Drehung der Schaltglieder 58, 58' um 180°, was im vorliegenden Fall dazu führt, dass das Schaltglied 58, 58' von der ersten Endlage 60 in die zweite Endlage 84, oder umgekehrt, gedreht wird.

Aus der Fig. 4 wird ebenfalls ersichtlich, dass die Ventilkörperabdeckungen 44, 44' im vorliegenden Fall U-förmige Aussparungen 98 zur Aufnahme der jeweiligen Anschlüsse 66, 66', 68, 68', 70, 70' der jeweiligen Gehäuse 30, 30' der Drehventile 22, 22' aufweisen. Da das Drehventil 22 baugleich zum weiteren Drehventil 22' ist, sind auch deren Ventilkörperabdeckungen 44, 44' baugleich.

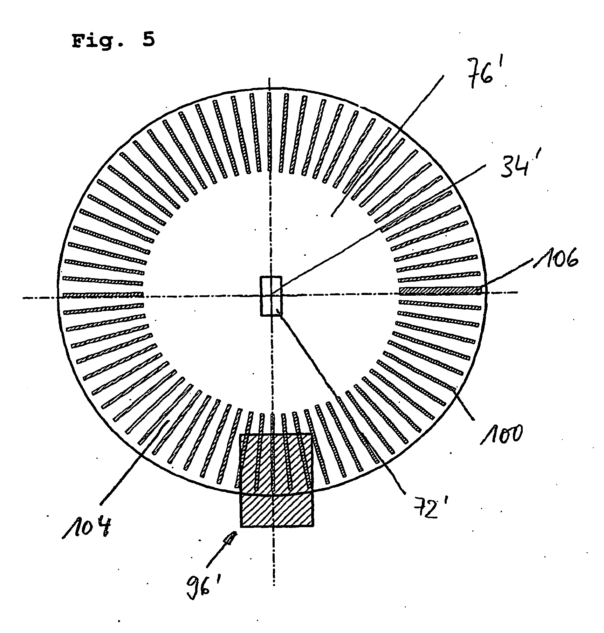

Die Fig. 5 zeigt eine vereinfachte Schnittdarstellung entlang der Schnittebene V-V der Fig. 3 und 4 zur besseren Darstellung der Positionierscheibe 76'. Auf der Drehventilwelle 72', welche in der vorliegenden Ausführungsform rechteckförmig ausgeführt ist, ist die Positionierscheibe 76' formschlüssig befestigt. Die kreisrunde Positionierscheibe 76' weist eine Vielzahl von Markierungen 100 oder schlitzförmige durchdringungen 102 auf, welche es der stationär im Steuerteil 16 angeordneten Sensorikeinheit 96' in Form des Inkrementalgebers ermöglichen, die Winkelposition der Drehventilwelle 72' festzustellen. Somit kann die Stellung des Schaltgliedes 58' des zugeordneten Drehventils 22' direkt erfasst werden. Versehen mit einer entsprechenden Steuerungs-, bzw. Regelungseinheit kann dadurch eine präzise Steuerung des Durchflusses des Mediums ermöglicht werden. Die Vielzahl von in Umfangsrichtung gleichmässig verteilten Markierungen 100 oder schlitzförmige Durchdringungen 102 sind in einem peripheren Bereich 104 der Positionierscheibe 76' angeordnet und radial gegen eine Aussparung zur Aufnahme der Drehventilwelle 72', bzw. die Drehachse 34, 34' ausgerichtet. Die Sensorikeinheit 96' ist derart angeordnet, dass der periphere Bereich 104 der Positionierscheibe 76' mit der Sensorikeinheit 96, welche beispielsweise eine Lichtschranke enthält, zusammenwirkt. Ähnlich einer der schlitzförmigen Durchdringungen 102 weist die Positionierscheibe 76' zudem eine breite, schlitzförmige Durchdringung 106 auf, welche als Spezialmarkierung 106 dazu dient, eine Initialposition für die Sensorikeinheit 96' zu bilden. Es ist selbstverständlich denkbar, dass auch andere Ausführungsformen für die Spezialmarkierung 106 geeignet sind. Es ist selbstverständlich auch denkbar, dass die Aussparung zur Aufnahme der Drehventilwelle 72' eine andere Form, beispielsweise eine quadratische Form aufweist, um drehfest und formschlüssig mit der entsprechend geformten Drehventilwelle 72' zusammenwirken zu können.

Mit einer solchen Überwachung der Schaltstellung der Schaltglieder 58, 58' der Drehventile 22, 22' können beispielsweise bei einem Versagen eines Zahnrades 78, 78' rasch entsprechende Massnahmen getroffen werden. Selbstverständlich ist es auch denkbar, dass nur eine der beiden Drehventilwellen 72, 72' eine Positionierscheibe 76 aufweist, da die identischen Zahnräder 78, 78' durch das Treibrad 50 synchronisiert sind.

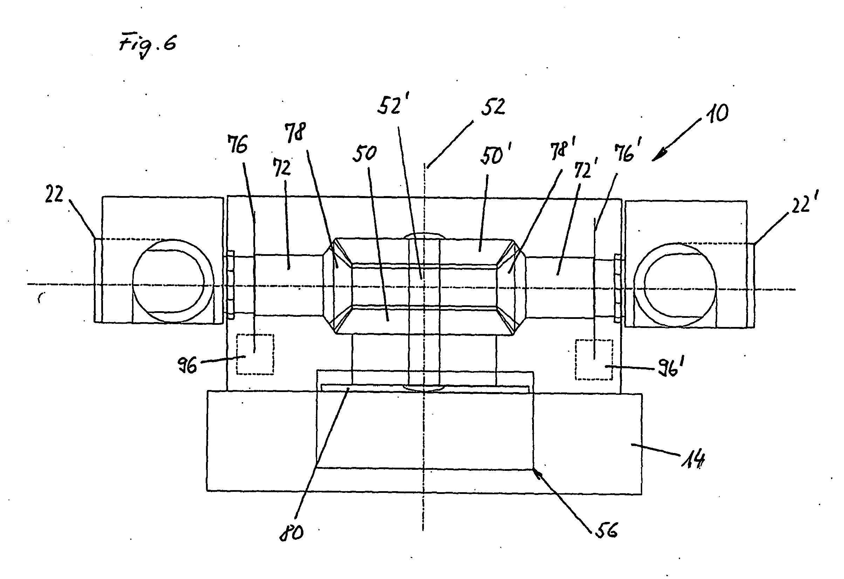

Die in der Figur 6 gezeigte zweite Ausführungsform des Steuergerätes 10 unterscheidet sich von der in den Figuren 1 - 5 gezeigten ersten Ausführungsform nur dadurch, dass auf der zur Treibradachse 52 koaxial angeordneten Treibwelle 52', welche die Drehbewegung von der Mitnehmereinrichtung 56 auf das Treibrad 50 überträgt, zusätzlich ein Sicherungsrad 50' angeordnet ist. Dazu ist die Treibwelle 52' über das Treibrad 50 hinaus verlängert. Das Sicherungsrad 50' ist gleich ausgebildet wie das Treibrad 50, wobei jedoch die mit den Zahnrädern 78, 78' kämmende, zahnbestückte Stirnseite der Oberseite 42 des Sockels 14 zugewandt ist. Das Sicherungsrad 50' ist auf der Treibwelle 52' frei drehbar gelagert, jedoch in axialer Richtung derart gehalten, dass es sich nicht in Richtung vom Sockel 14 weg aus der Kämmung mit den Zahnrädern 78, 78' hinaus bewegen kann. Dadurch wird eine äusserst zuverlässige Funktion erreicht.

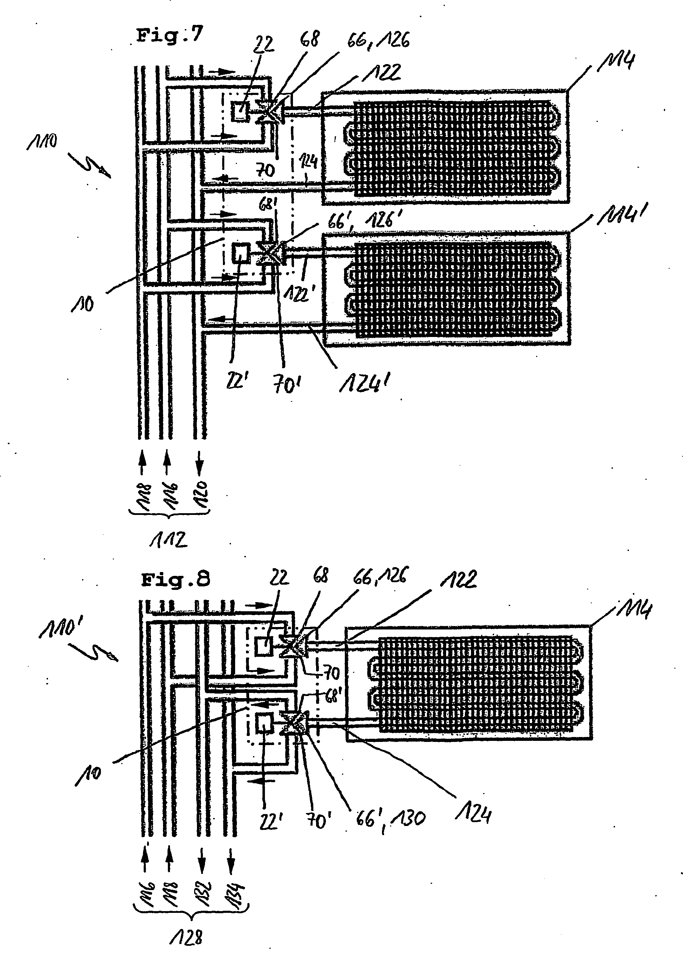

Fig. 7 zeigt einen Schemaausschnitt einer Klimaanlage 110 mit einem sogenannten Dreileitersystem 112, Klimakonvektoren 114, 114' und einem erfindungsgemässen Steuergerät 10. Das Dreileitersystem 112 umfasst eine Kühleingangsleitung 116, eine Heizeingangsleitung 118 und eine gemeinsame Rücklaufleitung 120. Das Steuergerät 10, ist dabei derart in die Klimaanlage 110 eingebaut, dass es die Klimakonvektoren 114, 114' parallel versorgt. Das erste Drehventil 22 dient dabei zur Versorgung des ersten Klimakonvektors 114, während das zweite Drehventil 22' zur Versorgung des zweiten Klimakonvektors 114' dient. Die Klimakonvektoren 114, 114' weisen einen Klimakonvektoreingang 122 bzw. 122' und einen Klimakonvektorausgang 124 bzw. 124' auf. Die Anschlüsse 66, 96' 68, 68', 70, 70' des Steuergerätes 10 sind dabei folgendermassen in das Schema der Klimaanlage 110 integriert:

Der erste, in Richtung der Drehachse 34, 34' zeigende Anschluss 66 des Drehventils 22 dient als Steuergeräteausgang 126 und ist mit dem Klimakonvektoreingang 122 des Klimakonvektors 114 verbunden. Der zweite Anschluss 68 des Drehventils 22 ist mit der Kühleingangsleitung 116 verbunden. Der dritte Anschluss 70 des Drehventils 22 ist mit der Heizeingangsleitung 118 verbunden. Der erste Anschluss 66' des Drehventils 22' dient ebenfalls als Steuergeräteausgang 126' und ist mit dem Klimakonvektoreingang 122' des Klimakonvektors 114' verbunden. Der zweite Anschluss 68' des Drehventils 22' ist mit der Kühleingangsleitung 116 verbunden und der dritte Anschluss 70' des Drehventils 22' ist mit der Heizeingangsleitung 118 verbunden. Die Klimakonvektorausgänge 124, 124' sind jeweils mit der gemeinsamen Rücklaufleitung 120 verbunden. Dadurch, dass das Drehventil 22 mit dem Drehventil 22' des Steuergeräte 10 über das Synchronisationsgetriebe 54 miteinander verbunden ist, werden die Klimakonvektoren 114, 114' jeweils synchron (parallel) mit einem Kühlmedium beziehungsweise einem Heizmedium versorgt.

Durch die gezeigte Anschlussgeometrie mit den Anschlüssen 66, 66', 68, 68', 70, 70' der Drehventile 22, 22' kann der Montageaufwand dadurch vereinfacht werden, dass eine relativ kompakte Bauweise des Steuergeräts 10 erzielt werden kann. Die kompakte Bauweise des Steuergeräts 10 eignet sich insbesondere auch für Nachrüstungen (Retrofit) von Klimaanlagen 110, insbesondere im Bodenbereich, wo zumeist ohnehin bereits knappe Platzverhältnisse vorherrschen.

Bei dem in Fig. 7 gezeigten Schemaausschnitt einer Klimaanlage 110 ist es durchaus möglich, dass sich die Schaltglieder 58, 58' der Drehventile 22, 22' des Steuergerätes 10 in einer Position befinden können, welche zwischen der ersten Endlage 60 und der zweiten Endlage 84 liegt. Dann ist der Teilkanal 86', 86' der L-förmigen Durchdringung des jeweiligen Schaltgliedes 58, 58', nur noch teilweise mit dem zweiten Anschluss 68, 68' oder dem dritten Anschluss 70, 70' hydraulisch verbunden und das Schaltglied 58, 58' bildet eine Verengung des hydraulischen Querschnittes. Damit sind die Drehventile 22, 22' dazu geeignet, eine Wärmeabgabe oder Wärmeaufnahme der Klimakonvektoren 114, 114' in Funktion des Drehwinkels der Schaltglieder 58, 58' zu ermöglichen.

Zur Verdoppelung der Heiz-/Kühlleistung eines einzigen Klimakonvektors 114 ist es auch denkbar, dass bei einem Einsatz in einem Dreileitersystem 112 die beiden ersten, als Steuergeräteausgänge 126, 126' dienenden Ausgänge 66, 66' an den Klimakonvektoreingang 122 angeschlossen sind.

Die Fig. 8 zeigt einen Schemaausschnitt einer Klimaanlage 110' mit einem Vierleitersystem 128, welches eine Kühleingangsleitung 116, eine Heizeingangsleitung 118, eine Kühlrücklaufleitung 132 und eine Heizrücklaufleitung 134 umfasst. In der in Fig. 8 gezeigten Variante der Klimaanlage 110' werden sämtliche Anschlüsse 66, 66', 68, 68', 70, 70' der Drehventile 22, 22' des Steuergerätes 10 zur Steuerung eines Klimakonvektors 114 benötigt. Der Klimakonvektor 114 weist wiederum einen Klimakonvektoreingang 122 sowie einen Klimakonvektorausgang 124 auf. Die zwei Drehventile 22 und 22' des Steuergerätes 10 sind dabei wie folgt geschaltet:

Der erste, in Richtung der Drehachse 34, 34' zeigende Anschluss 66 des Drehventils 22 dient als Steuergeräteausgang 126 und ist hydraulisch mit dem Klimakonvektoreingang 122 des Klimakonvektors 114 verbunden. Der zweiten Anschluss 68 des Drehventils 22 ist mit der Kühleingangsleitung 116 verbunden. Der dritte Anschluss 70 des Drehventils 22 ist mit der Heizeingangsleitung 118 verbunden. Der erste Anschluss 66' des Drehventils 22' ist mit dem Klimakonvektorausgang 124 des Klimakonvektors 114 verbunden und dient als Steuergeräteeingang 130. Der zweite Anschluss 68' des Drehventils 22' ist mit der Kühlrücklaufleitung 132 verbunden. Der dritte Anschluss 70' des Drehventils 22' ist mit der Heizrücklaufleitung 134 verbunden.

Durch eine solche Schaltung kann gewährleistet werden, dass ein Kühlmedium, welches bei einer ersten Endlage 60 der Schaltglieder 58, 58' über die Kühleingangsleitung 116 in den Klimakonvektor 114 über die separate Kühlrücklaufleitung 132 zurückspeist bzw. wenn sich die Schaltglieder 58, 58' in der zweiten Endlage 84 befinden, der Heizeingangsleitung 118 mit dem Klimakonvektor 114 derart verbunden ist, dass ein Heizmedium über den Klimakonvektor 114 mit der Heizrücklaufleitung 134 verbunden ist. Durch diese vollständige Trennung der Kalt- und Warmwasserkreisläufe 116, 132, bzw. 118, 134 kann eine Vermischung der beiden Medien ausgeschlossen werden. Energetisch bringt dies den Vorteil, dass besonders bei einer Umschaltung von Heizen auf Kühlen die Belastung der Klimaanlage 110' bzw. des dazugehörenden, nicht gezeigten Rückkühlers wesentlich kleiner wird, wodurch dessen Energiebedarf geringer wird und der Gesamtwirkungsgrad des Systems steigt.

Eine Zwischenstellung der Schaltglieder 58, 58' zwischen der ersten Endlage 60 und der zweiten Endlage 84 kann in bei Fig. 7 genannter Weise hier ebenfalls genutzt werden.

Selbstverständlich ist auch eine weitere Ausführungsform des Schemas für eine Klimaanlage mit einem Vierleitersystem 128 denkbar, in der mit einem Steuergerät 10 mehrere Klimakonvektoren 114 parallel ansteuerbar sind.

Es ist denkbar, dass das erfindungsgemässe Steuergerätes anstelle der Klimakonvektoren an eine mäanderartig verlegte Verrohrung, beispielsweise im Decken- oder im Bodenbereich angeschlossen wird, beispielsweise zur Deckenkühlung oder als Bodenheizung.

Für eine dritte, nicht gezeigten Ausführungsform des erfindungsgemässen Steuergerätes ist es denkbar, dass die Antriebswelle 53 des Antriebs 51 den Antriebsteil 12 in Richtung des Synchronisationsgetriebes 54 durchstösst, wobei die Antriebswelle 53 in der Längsmittelebene 62, parallel zur Längsachse 20 in Richtung des Steuerteils 16 weisend, angeordnet ist. Auf der Antriebswelle 53 sitzt drehfest das Treibrad 50 und kämmt mit den Zahnrädern 78, 78', welche den Drehventilwellen 72, 72' zugeordnet sind. Bei dieser Ausführungsform erfolgt der Antrieb der Drehventilwellen 72, 72' direkt vom auf der Antriebswelle 53 des Antriebes 51 sitzenden Treibrad 50.

Für eine vierte, ebenfalls nicht gezeigten Ausführungsform des erfindungsgemässen Steuergerätes ist es denkbar, dass das Treibrad 50 des Synchronisationsgetriebes 54 zwar wie bei den in den Fig. 2 bis 4 gezeigten Ausführungsform des Steuergerätes 10 entsprechend der zu diesen Figuren gehörenden Beschreibung am Sockel 14 gelagert ist. Unterschiedlich dazu ist bei der vierten Ausführungsform die Mitnehmereinrichtung 56 nicht von einem im Sockel 14 angeordneten Zwischengetriebe 55 angetrieben, denn der Antrieb 51 ist mit der Antriebswelle 53 wie bei der obgenannten dritten Ausführungsform angeordnet. Unterschiedlich zur dritten Ausführungsform ist das Verbindungselement 55 ein Zwischenrad, welches drehfest auf der Antriebswelle 53 sitzt und mit dem Treibrad 50 kämmt. Ein solcher Aufbau des Steuergerätes kann vorteilhaft sein, da der Antriebsteil 12 und der Steuerteil 16 als separate Baugruppen vormontierbar sind und erst gegen Ende des Herstellungsprozesses des Steuergeräts auf einem Sockel 14 einfachster Geometrie endmontiert werden können.

Es ist weiter denkbar, mehr als zwei Schaltglieder 58, 58' mit dem Treibrad 50 anzutreiben.

Es ist ebenfalls vorstellbar, dass der Antrieb 51 durch einen Standardantrieb mit einem eingebauten Raumfühleranschluss zum Direktanschluss an einen Raumbuskontroller gewährleistet wird.

Weiter ist denkbar, dass das Verbindungselement 55 ein Riemengetriebe ist. Zur Synchronisation könnte dabei beispielsweise ein Zahnriemen eingesetzt werden.

Es ist auch denkbar, dass die Positionierscheibe 76, 76' anstelle der Drehventilwelle 72, 72' auf einem Zwischenrad des Zwischengetriebes 55 oder dem Treibrad 50, bzw. dem buchsenartigen Grundkörper 88 sitzt und die dazugehörende Sensorikeinheit 96, 96' entsprechend im Sockel 14 oder im Antriebsteil 12 untergebracht ist. Je nach Übersetzung des Zwischengetriebes 55 kann die Drehlage der Schaltglieder 58, 58' dann nur indirekt ermittelt werden. Als Variante dazu ist es denkbar, dass die Positionierscheibe 76, 76' und die dazugehörige Sensorikeinheit 96, 96' im Antriebsteil 12 angeordnet ist.

Auch bei den Dreiweg-Kugelhähnen, welche als Drehventile 22, 22' eingesetzt werden, sind mehrere Ausführungsvarianten denkbar. So ist es durchaus vorstellbar, dass die Anschlüsse 66, 66', 68, 68', 70, 70' auch als Aussengewinde ausgeführt sind. Es ist auch möglich, dass die Aussengewinde konisch sind, um als selbstdichtende Gewindeverbindungen eingesetzt werden zu können. Es ist auch möglich, dass der Dreiweg-Kugelhahn 22, 22' an seinen Anschlüssen 66, 66', 68, 68', 70, 70' bereits eine geeignete Dichtung zum direkten Anschluss der Anschlussverbindungen aufweist. Auch ist es möglich, bei den Anschlüssen 66, 66', 68, 68', 70, 70' des T-förmigen Gehäuses 30, 30' geeignete geometrische Massnahmen zum Gegenstemmen, bzw. Gegenhalten, beispielsweise mit einem Gabelschlüssel vorhanden sind. So ist es denn durchaus vorstellbar, dass ein Aussen-Sechskant am T-förmigen Gehäuse 30, 30' integriert ist.

Weiter ist es vorstellbar, dass eine Regelblende im Dreiweg-Kugelhahn 22, 22' integriert ist, welche dazu dienen kann, ein lineares Verhalten der Wärmeabgabe in Funktion des Öffnungsgrades (des Drehwinkels) der Schaltglieder 58, 58' der Drehventile 22, 22' zu erzielen.

Um eine unerwünschte Drosselwirkung, welche zusätzliche hydraulische Verluste verursachen kann, zu vermeiden, weist die L-förmige Durchdringung der Schaltglieder 58, 58' dazu mit Vorteil den selben freien Durchmesser oder Querschnitt auf, wie den, welchen die Anschlussleitungen aufweisen.

Es ist auch denkbar, dass das Schaltglied 58, 58' anstelle einer Kugelform eine Zylinderform aufweist, wobei ein Schenkel der L-förmigen Durchdringung dann koaxial zur Drehachse 34, 34' verlaufen würde und der verbleibende Schenkel der L-förmigen den Zylindermantel durchdringen würde.

Weiter ist es denkbar, dass der Steuerteil 16 und die Drehventile 22, 22' in einem gemeinsamen Gehäuse untergebracht sind. Ebenso ist es vorstellbar, dass der Antriebsteil 12 und das Verbindungselement 55 in einem gemeinsamen Gehäuse untergebracht sind.

Es ist auch vorstellbar, dass die Drehventile 22, 22' des erfindungsgemässen Steuergerätes derart ausgerichtet sind, dass deren Querschenkel 24, 24', deren weitere Querschenkel 26, 26', sowie deren Drehachsenschenkel 32, 32' jeweils in zueinander und zur Längsmittelebene 62 parallelen Ventilebenen 49, 49' verlaufen und die Anschlüsse 66, 66', 68, 68', 70, 70' seitlich neben dem Sockel 14 vorbeilaufen, wobei die ersten Anschlüsse 66, 66' von der Oberseite 42 wegweisen.

## Patentansprüche

1. Steuergerät (10) mit einem Antriebsteil (12), einem Steuerteil (16) und einem, eine Längsachse (20) definierenden Sockel (14) mit einer Oberseite (42), wobei der Steuerteil (16) und der Antriebsteil (12) in Richtung der Längsachse (20) hintereinander auf der Oberseite (42) des Sockels (14) angeordnet sind und das Steuerteil (16) zwei separate, als 3/2-Wegeventile wirkende und je drei Anschlüsse (66, 66'; 68, 68'; 70, 70') aufweisende Drehventile (22, 22') mit jeweils einem, um eine Drehachse (34, 34') drehbaren Schaltglied (58, 58') aufweist, und die Schaltglieder (58, 58') über ein Synchronisationsgetriebe (54) miteinander und mit einem im Antriebsteil (12) angeordneten Antrieb (51) verbunden sind.

2. Steuergerät (10) nach Anspruch 1, **dadurch gekennzeichnet, dass** die Drehventile (22, 22') Dreiweg-Kugelhähne.sind.

3. Steuergerät (10) nach Anspruch 2, **dadurch gekennzeichnet, dass** jeder Dreiweg-Kugelhahn (22, 22') ein im wesentlichen T-förmiges Gehäuse (30, 30') mit einem zur zugeordneten Drehachse (34, 34') fluchtenden Drehachsenschenkel (32, 32') und einem rechtwinklig dazu angeordneten Querschenkel (24, 24') und einem rechtwinklig dazu angeordneten weiteren Querschenkel (26, 26') aufweist und in dem Gehäuse (30, 30') das kugelförmige Schaltglied (58, 58') mit einer sich darin befindlichen, L-förmigen Durchdringung derart um die zugeordnete Drehachse (34, 34') drehbar gelagert ist, dass durch die L-förmige Durchdringung in der ersten Endlage (60) ein erster Anschluss (66, 66') mit einem zweiten Anschluss (68, 68') des Dreiweg-Kugelhahns verbunden ist, während ein dritter Anschluss (70, 70') abgesperrt ist, und in der zweiten Endlage (84) der erste Anschluss (66, 66') mit dem dritten Anschluss (70, 70') verbunden ist, während der zweite Anschluss (68, 68') abgesperrt ist.

4. Steuergerät (10) nach Anspruch 3, **dadurch gekennzeichnet, dass** die beiden Querschenkel (24, 26; 24', 26') von einem der beiden Drehventile (22, 22') mit dem zugeordneten Drehachsenschenkel (32, 32') in einer Ventilebene (49) angeordnet sind, welche im wesentlichen parallel zur Oberseite (42) des Sockels (14) angeordnet ist.

5. Steuergerät (10) nach Anspruch 4, **dadurch gekennzeichnet, dass** die Querschenkel (24, 26; 24', 26) und die zugeordneten Drehachsenschenkel (32, 32') beider Drehventile (22, 22') in der Ventilebene (49) angeordnet sind.

6. Steuergerät (10) nach einem der Ansprüche 1 bis 5, **dadurch gekennzeichnet, dass** die Längsachse (20) in einer Längsmittelebene (62) angeordnet ist, die rechtwinklig zur Oberseite (42) des Sockels (14) verläuft und auf jeder Seite der Längsmittelebene (62) ein Drehventil (22, 22') angeordnet ist.

7. Steuergerät (10) nach Anspruch 6, **dadurch gekennzeichnet, dass** die, Drehachsen (34, 34') der Schaltglieder (58, 58') auf einer Geraden (64) angeordnet sind, welche rechtwinklig zur Längsmittelebene (62) verläuft.

8. Steuergerät (10) nach Anspruch 6 oder 7, **dadurch gekennzeichnet, dass** die Drehventile (22, 22') bezüglich der Längsmittelebene (62) symmetrisch angeordnet sind.

9. Steuergerät (10) nach einem der Ansprüchen 6 bis 8, **dadurch gekennzeichnet, dass** das Synchronisationsgetriebe (54) ein Kegelradgetriebe mit einem um eine Treibradachse (52) drehbaren Treibrad (50) ist, welches mit je einem mit dem Schaltglied (58, 58') des zugeordneten Drehventils (22, 22') drehfest verbundenen Zahnrad (78, 78') kämmt.

10. Steuergerät (10) nach Anspruch 9, **dadurch gekennzeichnet, dass** das Treibrad (50) drehfest auf einer Antriebswelle (53) des Antriebs (51) sitzt, welcher einen elektrischen Stellmotor umfasst.

11. Steuergerät (10) nach Anspruch 9, **dadurch gekennzeichnet, dass** das Treibrad (50) über ein Verbindungselement (55) mit einer Antriebswelle (53) des Antriebs (51) verbunden ist und der Antrieb (51) einen elektrischen Stellmotor umfasst.

12. Steuergerät (10) nach Anspruch 11, **dadurch gekennzeichnet, dass** die Treibradachse (52) des Treibrades (50) rechtwinklig zur Oberseite (42) des Sockels (14) verlaufend in der Längsmittelebene (62) angeordnet ist.

13. Steuergerät (10) nach Anspruch 11 oder 12, **dadurch gekennzeichnet, dass** das Verbindungselement (55) ein Zwischenrad ist, das kämmend mit dem Treibrad (50) drehfest auf der Antriebswelle (53) sitzt.

14. Steuergerät (10) nach Anspruch 12, **dadurch gekennzeichnet, dass** das vorzugsweise als Zwischengetriebe ausgebildete Verbindungselement (55) im Sockel (14) angeordnet ist.

15. Steuergerät (10) nach einem der Ansprüche 1 bis 14, **dadurch gekennzeichnet, dass** wenigstens eines der beiden Schaltglieder (58, 58') drehfest mit einer Positionierscheibe (76, 76') verbunden ist, welche mit einer ihr zugeordneten stationären Sensorikeinheit (96, 96'), vorzugsweise einem Inkrementalgeber, zum Erfassen der Winkelposition der Positionierscheibe (76, 76') zusammenwirkt.

## Claims

1. Control apparatus (10) with a drive part (12), with a control part (16) and with a base (14) defining a longitudinal axis (20) and having a top side (42), the control part (16) and the drive part (12) being arranged one behind the other in the direction of the longitudinal axis (20) on the top side (42) of the base (14), and the control part (16) having two separate rotary valves (22, 22') which act as 3/2-way valves and have in each case three connections (66, 66'; 68, 68'; 70, 70') and which each possess a switching member (58, 58') rotatable about an axis of rotation (34, 34'), and the switching members (58, 58') being connected via a synchronizing gear (54) to one another and to a drive (51) arranged in the drive part (12).

2. Control apparatus (10) according to Claim 1, **characterized in that** the rotary valves (22, 22') are three-way ball valves.

3. Control apparatus (10) according to Claim 2, **characterized in that** each three-way ball valve (22, 22') has a substantially T-shaped housing (30, 30') with an axis-of-rotation leg (32, 32') aligned with the assigned axis of rotation (34, 34') and with a transverse leg (24, 24') arranged at right angles thereto and a further transverse leg (26, 26') arranged at right angles thereto, and the spherical switching member (58, 58') with an L-shaped penetration located in it is mounted in the housing (30, 30') rotatably about the assigned axis of rotation (34, 34') in such a way that by means of the L-shaped penetration, in the first end position (60), a first connection (66, 66') is connected to a second connection (68, 68') of the three-way ball valve (22, 22'), while a third connection (70, 70') is shut off, and, in the second end position (84), the first connection (66, 66') is connected to the third connection (70, 70'), while the second connection (68, 68') is shut off.

4. Control apparatus (10) according to Claim 3, **characterized in that** the two transverse legs (24, 26; 24', 26') of one of the two rotary valves (22, 22') are arranged with the assigned axis-of-rotation leg (32, 32') in a valve plane (49) which is arranged substantially parallel to the top side (42) of the base (14).

5. Control apparatus (10) according to Claim 4, **characterized in that** the transverse legs (24, 26; 24', 26') and the assigned axis-of-rotation legs (32, 32') of the two rotary valves (22, 22') are arranged in the valve plane (49).

6. Control apparatus (10) according to one of Claims 1 to 5, **characterized in that** the longitudinal axis (20) is arranged in a longitudinal mid-plane (62) which runs at right angles with respect to the top side (42) of the base (14), and a rotary valve (22, 22') is arranged on each side of the longitudinal mid-plane (62).

7. Control apparatus (10) according to Claim 6, **characterized in that** the axes of rotation (34, 34') of the switching members (58, 58') are arranged in a straight line (64) which runs at right angles with respect to the longitudinal mid-plane (62).

8. Control apparatus (10) according to Claim 6 or 7, **characterized in that** the rotary valves (22, 22') are arranged symmetrically with respect to the longitudinal mid-plane (62).

9. Control apparatus (10) according to one of Claims 6 to 8, **characterized in that** the synchronizing gear (54) is a bevel gear with a driving wheel (50) which is rotatable about a driving-wheel axis (52) and which meshes in each case with a gearwheel (78, 78') connected fixedly in terms of rotation to the switching member (58, 58') of the assigned rotary valve (22, 22').

10. Control apparatus (10) according to Claim 9, **characterized in that** the driving wheel (50) is seated fixedly in terms of rotation on a drive shaft (53) of the drive (51) which comprises an electric servomotor.

11. Control apparatus (10) according to Claim 9, **characterized in that** the driving wheel (50) is connected via a connecting element (55) to a drive shaft (53) of the drive (51), and the drive (51) comprises an electric servomotor.

12. Control apparatus (10) according to Claim 11, **characterized in that** the driving-wheel axis (52) of the driving wheel (50) is arranged in the longitudinal mid-plane (62) so as to run at right angles with respect to the top side (42) of the base (14).

13. Control apparatus (10) according to Claim 11 or 12, **characterized in that** the connecting element (55) is an intermediate wheel which is seated fixedly in terms of rotation on the drive shaft (53) so as to mesh with the driving wheel (50).

14. Control apparatus (10) according to Claim 12, **characterized in that** the connecting element (55), preferably designed as an intermediate gear, is arranged in the base (14).

15. Control apparatus (10) according to one of Claims 1 to 14, **characterized in that** at least one of the two switching members (58, 58') is connected fixedly in terms of rotation to a positioning disc (76, 76') which cooperates with a stationary sensor unit (96, 96'), preferably an incremental encoder, assigned to it, for detecting the angular position of the positioning disc (76, 76').

## Revendications

1. Appareil de commande (10) doté d'une partie d'entraînement (12), d'une partie de commande (16), d'un socle (14) définissant un axe longitudinal (20) et doté d'un côté supérieur (42), la partie de commande (16) et la partie d'entraînement (12) étant disposées l'une derrière l'autre dans la direction de l'axe longitudinal (20) sur le côté supérieur (42) du socle (14) et la partie de commande (16) présentant deux vannes rotatives (22, 22') séparées, agissant comme vannes à 3/2 voies, présentant toutes deux trois raccordements (66, 66'; 68, 68'; 70, 70') et d'organes de commutation (58, 58') respectifs aptes à tourner autour d'un axe de rotation (34, 34'), les organes de commutation (58, 58') étant reliés l'un à l'autre par une transmission de synchronisation (54) et à un entraînement (51) disposé dans la partie d'entraînement (12).

2. Appareil de commande (10) selon la revendication 1, **caractérisé en ce que** les vannes rotatives (22, 22') sont des robinets à bille à trois voies.

3. Appareil de commande (10) selon la revendication 2, **caractérisé en ce que** chaque robinet à bille à trois voies (22, 22') présente un boîtier (30, 30') essentiellement en forme de T avec une branche d'axe de rotation (32, 32') alignée sur l'axe de rotation (34, 34') associé et une branche transversale (24, 24') disposée à angle droit par rapport à la précédente, ainsi qu'une autre branche transversale (26, 26') disposée à angle droit par rapport à la première, l'organe sphérique de commutation (58, 58') étant monté dans le boîtier (30, 30') à rotation autour de l'axe de rotation (34, 34') associé et étant traversé par un passage en forme de L, **en ce que** dans la première position d'extrémité (60), un premier raccordement (66, 66') est relié à un deuxième raccordement (68, 68') du robinet sphérique à trois voies (22, 22') par le passage en forme de L tandis qu'un troisième raccordement (70, 70') est bloqué, et **en ce que** dans la deuxième position d'extrémité (84), le premier raccordement (66, 66') est relié au troisième raccordement (70, 70') tandis que le deuxième raccordement (68, 68') est bloqué.

4. Appareil de commande (10) selon la revendication 3, **caractérisé en ce que** les deux branches transversales (24, 26; 24', 26') de l'une des deux vannes rotatives (22, 22') sont disposées avec la branche de l'axe de rotation (32, 32') associée dans un plan de vanne (49) qui est disposé essentiellement en parallèle au côté supérieur (42) du socle (14).

5. Appareil de commande (10) selon la revendication 4, **caractérisé en ce que** les branches transversales (24, 26; 24', 26) et les branches des axes de rotation (32, 32') associées des deux vannes rotatives (22, 22') sont disposées dans le plan de vanne (49).

6. Appareil de commande (10) selon l'une des revendications 1 à 5, **caractérisé en ce que** l'axe longitudinal (20) est disposé dans un plan longitudinal central (62) perpendiculaire du côté supérieur (42) du socle (14) et **en ce qu'**une vanne rotative (22, 22') est disposée sur chaque côté du plan longitudinal central (62).

7. Appareil de commande (10) selon la revendication 6, **caractérisé en ce que** les axes de rotation (34, 34') des organes de commutation (58, 58') sont disposés sur une droite (64) perpendiculaire au plan longitudinal central (62).

8. Appareil de commande (10) selon les revendications 6 ou 7, **caractérisé en ce que** les vannes rotatives (22, 22') sont disposées symétriquement par rapport au plan longitudinal central (62).

9. Appareil de commande (10) selon l'une des revendications 6 à 8, **caractérisé en ce que** l'entraînement de synchronisation (54) est une transmission à roues coniques dotée d'une roue d'entraînement (50) apte à tourner autour d'un axe (52) de roue d'entraînement et qui s'engrène sur une roue dentée (78, 78') respective reliée à rotation solidaire à l'organe de commutation (58, 58') de la vanne rotative (22, 22') associée.

10. Appareil de commande (10) selon la revendication 9, **caractérisé en ce que** la roue d'entraînement (50) est placée à rotation solidaire sur un arbre d'entraînement (53) de l'entraînement (51) qui comprend un moteur électrique d'ajustement.

11. Appareil de commande (10) selon la revendication 9, **caractérisé en ce que** la roue d'entraînement (50) est reliée par un élément de liaison (55) à un arbre d'entraînement (53) de l'entraînement (51) et **en ce que** l'entraînement (51) comprend un moteur électrique d'ajustement.

12. Appareil de commande (10) selon la revendication 11, **caractérisé en ce que** l'axe (52) de la roue d'entraînement (50) est perpendiculaire au côté supérieur (42) du socle (14) et s'étend dans le plan longitudinal central (62).

13. Appareil de commande (10) selon les revendications 11 ou 12, **caractérisé en ce que** l'élément de liaison (55) est une roue intermédiaire qui s'engrène sur la roue d'entraînement (50) à rotation solidaire sur l'arbre d'entraînement (53).

14. Appareil de commande (10) selon la revendication 12, **caractérisé en ce que** l'élément de liaison (55) configuré de préférence comme entraînement intermédiaire est disposé dans le socle (14).

15. Appareil de commande (10) selon l'une des revendications 1 à 14, **caractérisé en ce qu'**au moins l'un des deux organes de commutation (58, 58') est relié à rotation solidaire à un disque de positionnement (76, 76') qui coopère avec une unité stationnaire de détecteurs (96, 96'), qui lui est associée, d'un émetteur incrémentiel qui détecte la position angulaire de la plaque de positionnement (76, 76').
